# FASCICULE DE BREVET EUROPEEN

(11) **EP 2 610 126 B1**
(45) Date de publication et mention de la délivrance du brevet: **30.07.2014**
(21) Numéro de dépôt: 12198145.0
(22) Date de dépôt: 19.12.2012
(51) Int. Cl.: B60W 20/00, B60W 50/14, B60K 6/46, B60R 16/023

(54) **Procédé d'aide à la conduite pour un véhicule hybride**
Verfahren zur Fahrerunterstützung für Hybridfahrzeug
Method for assistance in driving a hybrid vehicle

(30) Priorité: 02.01.2012 FR 1250023
(43) Date de publication de la demande: 03.07.2013
(73) Titulaire: PEUGEOT CITROËN AUTOMOBILES SA, 78140 Velizy-Villacoublay (FR)
(72) Inventeur: Plantier, Matthieu, 78420 Carrières-sur-Seine (FR)

(56) Documents cités:
- EP-A1- 2 311 683
- WO-A2-2009/031021
- DE-C1- 19 533 829
- US-A1- 2011 046 834

## Description

La présente invention concerne un procédé d'aide à la conduite pour un véhicule hybride, ainsi qu'un véhicule hybride mettant en oeuvre un tel procédé.

Certain types de véhicules hybrides comportent une machine électrique de traction qui délivre un couple moteur sur les roues de ce véhicule, en utilisant l'énergie stockée dans des accumulateurs électriques, ainsi qu'un module d'extension d'autonomie qui génère une puissance destinée à prolonger l'autonomie du véhicule.

Les accumulateurs électriques appelés par la suite batteries, peuvent être réalisés suivant différentes technologies. Elles comportent généralement une faible densité de puissance par rapport à la masse, et se rechargent lentement.

Le module d'extension d'autonomie comporte avantageusement une source d'énergie comprenant une plus forte densité de puissance par rapport à la masse, ainsi qu'une possibilité de rechargement plus rapide.

On peut utiliser notamment un moteur thermique du type essence ou Diesel, qui entraîne une génératrice électrique rechargeant les batteries, ou qui entraîne directement les roues motrices, une pile à combustible à hydrogène ou à hydrocarbure, ou des batteries à recharge rapide, par un remplissage avec un liquide par exemple.

Généralement pour ces véhicules, les trajets comportant une distance limitée sont effectués uniquement avec l'énergie électrique stockée dans les batteries, ce qui permet de ne pas émettre de gaz polluants pendant ces trajets.

De plus les batteries sont habituellement rechargées la nuit sur une place de parking, à partir d'un réseau de distribution extérieur délivrant une énergie comportant un coût qui est beaucoup plus faible, par rapport à celui d'une source d'énergie liquide comme un carburant un alcool.

Pour des trajets plus longs, le module d'extension d'autonomie, appelé aussi « range extender », est alors démarré pour délivrer une puissance complémentaire venant s'ajouter à celle fournie par les batteries. Dans le cas où les batteries sont vides, le module d'extension d'autonomie devient alors la seule source d'énergie pour permettre la traction du véhicule.

On a ainsi la possibilité d'obtenir une puissance de traction venant des batteries qui peut être importante, mais avec des batteries comportant une vitesse de recharge qui est habituellement lente, et une puissance venant du module d'extension d'autonomie qui est généralement faible, mais avec la possibilité de recharger plus rapidement sa source d'énergie.

Avec ce type de véhicule, dans le cas où le module d'extension d'autonomie a démarré pour finir un trajet assez long nécessitant une prolongation d'autonomie par ce module, tant que les batteries ne sont pas vides, même si la quantité d'énergie restante est faible, on dispose alors toujours d'une possibilité de puissance instantanée relativement importante venant de ces batteries.

Cette puissance instantanée disponible constitue pour le conducteur un facteur de sécurité objectif, lui permettant par exemple d'assurer une forte accélération pour des dépassements, ou une vitesse élevée pendant un court instant. Elle constitue aussi un facteur de sécurité subjectif qui le rassure, en lui montrant que le véhicule est toujours capable de répondre à ses demandes.

Cependant un problème qui se pose, est que si les batteries sont entièrement vides avant la fin du trajet, il ne reste alors plus que le module d'extension d'autonomie comme source d'énergie pour déplacer le véhicule. Or la puissance de ces modules d'extension dédiés à la prolongation d'autonomie est généralement faible, de manière à obtenir des ensembles légers et compacts, pour ne pas pénaliser ce type de véhicule pendant la majorité du temps où ces modules ne servent pas.
Par ailleurs, les véhicules électriques ou hybrides comportent généralement un indicateur donnant le niveau de la puissance électrique réellement consommée sur les batteries.

Pour surveiller la consommation électrique sur un véhicule hybride en fonction de trajets prédéterminés, un procédé connu d'affichage de cette puissance selon le préambule de la revendication 1, présenté notamment par le document DE-C1-19533829, indique au conducteur des niveaux de puissance conseillée, afin de limiter la consommation d'énergie électrique venant des batteries pour pouvoir terminer le trajet.

Toutefois ce procédé n'est pas adapté pour les véhicules comportant une réserve d'énergie utilisée par un module d'extension d'autonomie, afin de permettre au conducteur de garder une réserve de puissance suffisante en fin de parcours.

La présente invention a notamment pour but d'éviter ces inconvénients de la technique antérieure.

Elle propose à cet effet un procédé d'aide à la conduite pour un véhicule hybride, comportant une machine électrique de traction qui délivre un couple sur les roues de ce véhicule en utilisant l'énergie stockée dans des batteries, ainsi qu'un module d'extension d'autonomie alimenté par une réserve d'énergie, **caractérisé en ce qu'**à partir du niveau d'énergie restant dans la réserve d'énergie, et du niveau de charge des batteries, il réalise des modèles de consommation de ces deux énergies, puis il affiche pour le conducteur une puissance maximum conseillée, permettant de continuer le trajet de manière à ce que les batteries ne soient pas vides avant la réserve d'énergie.

Un avantage de ce procédé d'aide à la conduite, est qu'avec cet affichage de puissance conseillée à ne pas dépasser, le conducteur est incité à respecter cette limite de puissance, et ainsi à ne pas demander une puissance trop forte qui pourrait vider les batteries plus vite que la réserve d'énergie. On garde ainsi jusqu'à la fin de la réserve d'énergie, une possibilité de puissance élevée délivrée par les batteries qui garantit la sécurité du véhicule, et qui rassure le conducteur en répondant à ses demandes.

Le procédé d'aide à la conduite selon l'invention peut en outre comporter une ou plusieurs des caractéristiques suivantes, qui peuvent être combinées entre elles.

Avantageusement, le procédé d'aide à la conduite déduit de la puissance maximum conseillée, une vitesse maximum conseillée du véhicule qui est aussi affichée.

Avantageusement, le procédé d'aide à la conduite met en oeuvre un modèle de fonctionnement de la machine électrique de traction, pour en fonction de différentes informations reçues, notamment la puissance maximum conseillée, établir la vitesse maximum conseillée.

Avantageusement, le procédé d'aide à la conduite met en oeuvre un modèle de fonctionnement du véhicule, pour en fonction de différentes informations reçues, notamment la puissance maximum conseillée, établir la vitesse maximum conseillée.

Les différentes informations reçues peuvent comporter l'une au moins des informations suivantes, la puissance électrique consommée par des systèmes auxiliaires, un historique de consommation du véhicule, des informations sur la route suivie, ou le trajet effectué venant d'un système de navigation.

Avantageusement, l'affichage de la puissance conseillée ou de la vitesse conseillée, se fait sur un système d'affichage existant pour présenter au conducteur d'autres fonctions.

L'affichage de la puissance conseillée ou de la vitesse conseillée, peut se faire en superposant ces informations respectivement sur l'indicateur donnant le niveau de puissance électrique réellement consommée, ou sur le compteur de vitesse du véhicule.

L'invention a aussi pour objet un véhicule hybride comportant une machine électrique de traction qui délivre un couple sur les roues de ce véhicule en utilisant l'énergie stockée dans des batteries, ainsi qu'un module d'extension d'autonomie alimenté par une réserve d'énergie, ce véhicule mettant en oeuvre un procédé d'aide à la conduite comportant l'une quelconque des caractéristiques précédentes.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :
- la figure 1 est un schéma d'un véhicule hybride disposant d'un module d'extension d'autonomie comportant un moteur thermique ; et
- la figure 2 est un schéma présentant le fonctionnement d'un procédé selon l'invention, pour ce véhicule.

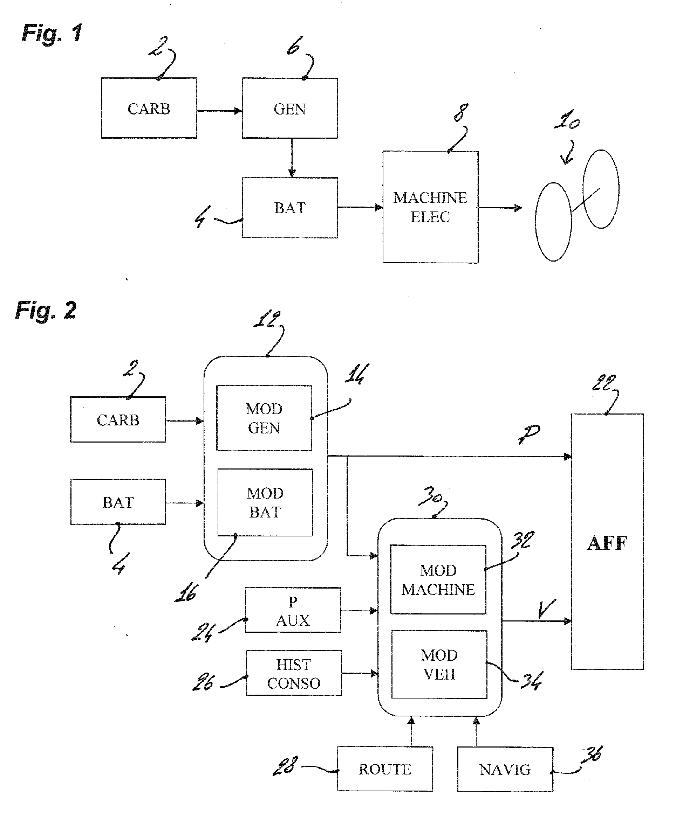

La figure 1 présente un véhicule hybride comportant une machine électrique de traction « MACHINE ELEC » 8 alimentée par des batteries « BAT » 4, qui entraîne des roues motrices 10.

Un module d'extension d'autonomie est constitué dans cet exemple par un générateur électrique « GEN » 6, comprenant un moteur thermique alimenté par un réservoir de carburant « CARB » 2, qui entraîne une génératrice pour recharger directement les batteries 4.

La figure 2 présente un procédé utilisant une mesure du niveau de carburant dans le réservoir 2, et une estimation de la charge des batteries 4 à partir de paramètres comme la tension ou l'intensité, qui sont délivrées à une fonction de modélisation des consommations 12.

La fonction de modélisation des consommations 12 comporte un modèle de consommation de carburant par le moteur thermique entraînant la génératrice « MOD GEN » 14, qui estime les pertes liées à l'utilisation de ce générateur 6, pour calculer la consommation de carburant en fonction de la puissance électrique générée.

On peut donc ainsi prévoir pour le générateur électrique 6, à partir du niveau de carburant 2, le temps de fonctionnement restant en fonction des niveaux de puissance électrique qu'il délivre.

La fonction de modélisation des consommations 12 comporte aussi un modèle de consommation de l'énergie électrique de la batterie « MOD BAT » 16, pour alimenter la machine électrique de traction 8 ou des accessoires avec une certaine puissance électrique, qui estime la vitesse de décharge de la batterie 4 en fonction de cette puissance électrique consommée.

On peut de la même manière prévoir pour la machine électrique 8, à partir du niveau de charge des batteries 4, le temps de fonctionnement restant en fonction de la puissance mécanique P qu'elle délivre aux roues motrices 10.

Le procédé d'aide à la conduite est mis en oeuvre quand le niveau d'énergie contenu dans les batteries 4 est suffisamment bas en fonction de la puissance demandée, pour mettre en marche le générateur électrique 6 en démarrant son moteur thermique afin de prolonger l'autonomie du véhicule. Le générateur électrique 6 délivre alors avec une puissance modérée et constante, un courant de recharge des batteries 4.

La puissance électrique consommée par la machine électrique 8, occasionne alors une décharge des batteries 4 si elle est plus élevée que celle délivrée par le générateur électrique 6. Ce cas se présente par exemple pour les roulages sur route ou autoroute comportant des vitesses assez élevées nécessitant une certaine puissance, pour des demandes de fortes accélérations, ou pour gravir des pentes.

Le procédé d'aide à la conduite calcule alors de manière périodique avec la fonction de modélisation des consommations 12, à partir des niveaux d'énergie restant 2, 4, la puissance maximum conseillée P que peut utiliser le conducteur, qui donnera une consommation d'énergie électrique pas trop importante pour ne pas vider les batteries 4 avant le réservoir de carburant 2.

Le véhicule comporte un affichage « AFF » 22 présenté au conducteur, qui affiche en permanence le niveau de puissance maximum conseillée P, de manière à l'inciter à rester en dessous de ce niveau. Le conducteur peut alors facilement comparer le niveau de puissance électrique réellement consommée donné par un indicateur généralement présent sur les véhicules hybrides, avec ce niveau de puissance maximum conseillée P.

Le conducteur dispose ainsi d'une aide simple et efficace, qui lui assure dans le cas où la puissance maximum conseillée P est respectée, la possibilité d'utiliser toute la réserve de carburant du réservoir 2 pour finir son trajet, tout en disposant d'une puissance élevée pendant un temps court grâce à l'énergie restant dans les batteries 4 qui ne seront pas vides avant la fin de ce trajet.

L'affichage 22 peut utiliser tous systèmes connus, notamment des moyens lumineux comme des LED colorées, un écran d'affichage, ou des moyens mécaniques comme un disque en rotation ou un masque mobile, qui affichent successivement différents niveaux de la puissance maximum conseillée P.

En option, le procédé peut utiliser aussi une fonction de modélisation de la vitesse du véhicule 30, recevant le niveau de puissance maximum conseillée P, ainsi que d'autres informations comme la puissance électrique consommée par des systèmes auxiliaires « P AUX » 24, un historique de consommation de ce véhicule « HIST CONSO » 26, des informations sur la route suivie « ROUTE » 28, ou sur le trajet effectué venant d'un système de navigation « NAVIG » 36,

La fonction de modélisation de la vitesse du véhicule 30, comporte un modèle de fonctionnement de la machine électrique de traction « MOD MACHINE » 32, et un modèle de fonctionnement du véhicule « MOD VEH » 34, qui en fonction des différentes informations reçues, notamment la puissance maximum conseillée P, établit la vitesse du véhicule maximum conseillée V correspondant à cette puissance.

Le procédé affiche alors sur l'afficheur 22 la vitesse maximum conseillée V, de manière à aider le conducteur qui peut facilement la comparer avec celle indiquée par le compteur de vitesse du véhicule.

Pour l'affichage de puissance conseillée P ou de vitesse conseillée V, l'affichage peut se faire en superposant cette information respectivement sur l'indicateur donnant le niveau de puissance électrique réellement consommée, ou sur le compteur de vitesse, de manière à ce que le conducteur puisse directement comparer le fonctionnement réel du véhicule avec celui qui lui et demandé.

On obtient ainsi un moyen simple et efficace, qui peut être économique en intégrant les logiciels dans des calculateurs du véhicule, et l'afficheur 22 dans un système d'affichage existant, pour rouler en sécurité et rassurer le conducteur, en lui permettant jusqu'à la fin de son trajet de bénéficier de la puissance de traction qu'il pourrait demander.

Ce moyen peut s'appliquer à différents principes de module d'extension d'autonomie, qui peuvent produire un courant électrique rechargeant les batteries, ou une puissance mécanique directement appliquée sur les roues motrices du véhicule.

## Revendications

1. Procédé d'aide à la conduite pour un véhicule hybride, comportant une machine électrique de traction (8) qui délivre un couple sur les roues (10) de ce véhicule en utilisant l'énergie stockée dans des batteries (4), ainsi qu'un module d'extension d'autonomie (6) alimenté par une réserve d'énergie (2), **caractérisé en ce qu'à** partir du niveau d'énergie restant dans la réserve d'énergie (2), et du niveau de charge des batteries (4), il réalise des modèles de consommation de ces deux énergies (14, 16), puis il affiche pour le conducteur une puissance maximum conseillée (P), permettant de continuer le trajet de manière à ce que les batteries (4) ne soient pas vides avant la réserve d'énergie (2).

2. Procédé d'aide à la conduite selon la revendication 1, **caractérisé en ce qu'il** déduit de la puissance maximum conseillée (P), une vitesse maximum conseillée (V) du véhicule qui est aussi affichée.

3. Procédé d'aide à la conduite selon la revendication 2, **caractérisé en ce qu'il** met en oeuvre un modèle de fonctionnement de la machine électrique de traction (32), pour en fonction de différentes informations reçues, notamment la puissance maximum conseillée (P), établir la vitesse maximum conseillée (V).

4. Procédé d'aide à la conduite selon la revendication 2 ou 3, **caractérisé en ce qu'il** met en oeuvre un modèle de fonctionnement du véhicule (34), pour en fonction de différentes informations reçues, notamment la puissance maximum conseillée (P), établir la vitesse maximum conseillée (V).

5. Procédé d'aide à la conduite selon la revendication 3 ou 4, **caractérisé en ce que** les différentes informations reçues comportent l'une au moins des informations suivantes, la puissance électrique consommée par des systèmes auxiliaires (24), un historique de consommation du véhicule (26), des informations sur la route suivie (28), ou le trajet effectué venant d'un système de navigation (36).

6. Procédé d'aide à la conduite selon l'une quelconque des revendications précédentes, **caractérisé en ce que** l'affichage de la puissance conseillée (P) ou de la vitesse conseillée (V), se fait sur un système d'affichage (22) existant pour présenter au conducteur d'autres fonctions.

7. Procédé d'aide à la conduite selon la revendication 6, **caractérisé en ce que** l'affichage de la puissance conseillée (P) ou de la vitesse conseillée (V), se fait en superposant ces informations respectivement sur l'indicateur donnant le niveau de puissance électrique réellement consommée, ou sur le compteur de vitesse du véhicule.

8. Véhicule hybride comportant une machine électrique de traction (8) qui délivre un couple sur les roues (10) de ce véhicule en utilisant l'énergie stockée dans des batteries (4), ainsi qu'un module d'extension d'autonomie (6) alimenté par une réserve d'énergie (2), **caractérisé en ce qu'il** met en oeuvre un procédé d'aide à la conduite réalisé selon l'une quelconque des revendications précédentes.

## Patentansprüche

1. Verfahren zur Fahrerunterstützung für ein Hybridfahrzeug, das einen elektrischen Zugmotor (8) aufweist, der ein Drehmoment auf den Rädern (10) dieses Fahrzeugs liefert, indem Energie verwendet wird, die in Akkumulatoren (4) gespeichert ist, sowie ein Autonomieerweiterungsmodul (6), das von einer Energiereserve (2) versorgt wird, **dadurch gekennzeichnet, dass** es ausgehend vom Restenergieniveau, das in der Energiereserve (2) bleibt, und von dem Ladeniveau der Akkumulatoren (4) Verbrauchsmodelle dieser zwei Energien (14, 16) erstellt und dann für den Fahrer eine empfohlene Höchstleistung (P) anzeigt, die es erlaubt, die Fahrt derart fortzusetzen, dass die Akkumulatoren (4) nicht vor der Energiereserve (2) leer werden.

2. Verfahren zur Fahrerunterstützung nach Anspruch 1, **dadurch gekennzeichnet, dass** es aus der empfohlenen Höchstleistung (P) eine empfohlene Höchstgeschwindigkeit (V) des Fahrzeugs, die ebenfalls angezeigt wird, ableitet.

3. Verfahren zur Fahrerunterstützung nach Anspruch 2, **dadurch gekennzeichnet, dass** es ein Betriebsmodell des elektrischen Zugmotors (32) umsetzt, um in Abhängigkeit von verschiedenen empfangenen Informationen, insbesondere der empfohlenen Höchstleistung (P), die empfohlene Höchstgeschwindigkeit (V) festzulegen.

4. Verfahren zur Fahrerunterstützung nach Anspruch 2 oder 3, **dadurch gekennzeichnet, dass** es ein Betriebsmodell des Fahrzeugs (34) umsetzt, um in Abhängigkeit von verschiedenen empfangenen Informationen, insbesondere der empfohlenen Höchstleistung (P), die empfohlene Höchstgeschwindigkeit (V) festzulegen.

5. Verfahren zur Fahrerunterstützung nach Anspruch 3 oder 4, **dadurch gekennzeichnet, dass** die verschiedenen empfangenen Informationen wenigstens eine der folgenden Informationen enthalten, die von den Hilfssystemen (24) verbrauchte elektrische Leistung, eine Verbrauchshistorie des Fahrzeugs (26), Informationen über die gefahrene Route (28) oder die zurückgelegte Fahrt, die von einem Navigationssystem (36) stammt.

6. Verfahren zur Fahrerunterstützung nach einem der vorhergehenden Ansprüche, **dadurch gekennzeichnet, dass** das Anzeigen der empfohlenen Leistung (P) oder der empfohlenen Geschwindigkeit (V) auf einem Anzeigesystem (22), das existiert, um dem Fahrer andere Funktionen zu präsentieren, erfolgt.

7. Verfahren zur Fahrerunterstützung nach Anspruch 6, **dadurch gekennzeichnet, dass** die Anzeige der empfohlenen Leistung (P) oder der empfohlenen Geschwindigkeit (V) erfolgt, indem diese Informationen jeweils auf dem Anzeiger, der das tatsächlich verbrauchte Niveau an elektrischer Leistung gibt, oder auf dem Tachometer des Fahrzeugs überlagert werden.

8. Hybridfahrzeug, das einen elektrischen Zugmotor (8) aufweist, der ein Drehmoment auf die Räder (10) dieses Fahrzeugs liefert, indem Energie verwendet wird, die in Akkumulatoren (4) gespeichert ist, sowie ein Autonomieerweiterungsmodul (6), das von einer Energiereserve (2) versorgt wird, **dadurch gekennzeichnet, dass** es ein Verfahren zur Fahrerunterstützung nach einem der vorhergehenden Ansprüche umsetzt.

## Claims

1. A method for assistance in driving a hybrid vehicle, comprising an electric traction machine (8) which delivers a torque on the wheels (10) of this vehicle by using the energy stored in batteries (4), and a range extension module (6) supplied by an energy reserve (2), **characterized in that** from the level of energy remaining in the energy reserve (2), and from the charge level of the batteries (4), it realizes consumption models of these two energies (14, 15), then it displays for the driver a recommended maximum power (P), permitting the journey to be continued such that the batteries (4) are not empty before the energy reserve (2).

2. The method for assistance in driving according to claim 1, **characterized in that** it deduces from the recommended maximum power (P) a recommended maximum speed (V) of the vehicle, which is also displayed.

3. The method for assistance in driving according to claim 2, **characterized in that** it implements an operation model of the electric traction machine (32), to establish the recommended maximum speed (V) as a function of different received information, in particular the recommended maximum power (P).

4. The method for assistance in driving according to claim 2 or 3, **characterized in that** it implements an operation model of the vehicle (34), to establish the recommended maximum speed (V) as a function of different received information, in particular the recommended maximum power (P).

5. The method for assistance in driving according to claim 3 or 4, **characterized in that** the different received information includes one at least of the following: the electric power consumed by auxiliary systems (24), a consumption history of the vehicle (26), information concerning the route which is followed (28), or the journey carried out originating from a navigation system (36).

6. The method for assistance in driving according to any one of the preceding claims, **characterized in that** the display of the recommended power (P) or of the recommended speed (V) is made on a display system (22) existing to present other functions to the driver.

7. The method for assistance in driving according to claim 6, **characterized in that** the display of the recommended power (P) or of the recommended speed (V) is made by superimposing this information respectively on the indicator giving the level of electric power actually consumed, or on the speedometer of the vehicle.

8. A hybrid vehicle comprising an electric traction machine (8) which delivers a torque on the wheels (10) of this vehicle by using the energy stored in batteries (4), and also a range extension module (6) supplied by an energy reserve (2), **characterized in that** it implements a method for assistance in driving realized according to any one of the preceding claims.
